# DEMANDE DE BREVET EUROPEEN

(11) **EP 0 621 676 A1**
(43) Date de publication de la demande: **26.10.1994**
(21) Numéro de dépôt: 94400857.2
(22) Date de dépôt: 20.04.1994
(51) Int. Cl.: H02J 13/00

(54) **Procédé de comptage d'énergie au sein d'un réseau d'alimentation électrique, système mettant en oeuvre ce procédé, appareils électriques et dispositifs de gestion d'énergie associés**

(30) Priorité: 21.04.1993 FR 9304710
(71) Demandeur: EURO CP s.a.r.l., F-94240 l'Hay les Roses (FR)
(72) Inventeur: Gilbert, Jérôme, F-92300 Levallois Perret (FR)
(74) Mandataire: Pontet, Bernard

(57) **Abrégé**

Procédé de comptage de l'énergie consommée par un ensemble d'appareils électriques (10, 20, 40, 70) reliés à un réseau local de distribution d'énergie (R) et pouvant communiquer de manière directionnelle entre eux et avec des moyens de gestion d'énergie (30) reliés également au réseau (R).

Au niveau de chaque appareil (10, 20, 40, 70), des estimations de consommation d'énergie sont effectuées, les informations d'estimation correspondantes sont stockées, et ces informations sont ensuite transmises via le réseau (R) aux moyens de gestion d'énergie (30) pour y être traitées et analysées.

## Description

La présente invention concerne un procédé de comptage d'énergie au sein d'un réseau d'alimentation électrique.

Elle vise également un système mettant en oeuvre ce procédé, des appareils électriques et des dispositifs de gestion d'énergie associés.

Une gestion rationnelle de l'énergie consommée dans un local implique une connaissance des différents postes de dépense énergétique et de répartition des charges par localisation, par nature de service. Pour obtenir les données énergétiques nécessaires à cette gestion dans un système doté généralement d'un unique compteur d'énergie placé en tête d'un réseau alimentant un local en énergie, on dispose actuellement, selon les appareils électriques, d'informations sur leur cycle de fonctionnement, leur taux d'utilisation, et sur leurs caractéristiques énergétiques contractuelles ou prédéterminées expérimentalement. Ces informations permettent certes d'obtenir une indication sur la répartition des différents postes de consommation d'énergie, mais cette répartition simulée ne peut représenter la répartition effective d'énergie parce que d'une part, de nombreux appareils présentent un fonctionnement intermittent commandé par des dispositifs munis de capteurs physiques dont les commutations ne sont donc pas fixées temporellement, et d'autre part, parce que cette répartition simulée ne peut être que pertinente que si elle est déterminée sur un laps de temps significatif permettant en quelque sorte de lisser les variations instantanées d'énergie dues au caractère intrinsèquement asynchrone des fonctionnements asynchrones des différents appareils reliés au réseau. Une telle répartition ne peut donc être utilisée pour effectuer une gestion dynamique de l'énergie consommée dans le système.

La demande de brevet internationale WO81/00619 du 20 Août 1980 divulgue un dispositif central de lecture et d'enregistrement de la consommation électrique d'abonnés, mettant en oeuvre des communications entre producteur et consommateurs utilisant une technique de courants porteurs sur le réseau d'alimentation électrique. Ce dispositif central communique avec des sites locaux de consommation, par exemple un consommateur, un groupe de consommateurs ou encore des sites industriels. Ces sites locaux de consommation sont normalement équipés un compteur d'énergie électrique qui transmet au dispositif central des informations relatives à la consommation globale d'énergie du site local. Le système décrit ne peut pas permettre une analyse de consommation d'énergie d'équipements électriques sur un réseau d'alimentation.

le brevet américain US-A-4777354 du 11 Octobre 1988 décrit un système pour commander la fourniture de prestation à des consommateurs, notamment des fluides, de l'énergie ou des communications. Ce système ne prend en compte que la gestion de durées prédéterminées de prestations de service et ne prévoit pas d'estimation locale de consommation d'énergie au niveau de chaque équipement. La facturation des services est fondée uniquement sur leurs durées respectives.

Le brevet japonais JP-A-56111468 du 3 Septembre 1981 divulgue un procédé d'estimation de consommation d'énergie d'un équipement électrique, notamment un conditionneur d'air, mettant en oeuvre une multiplication d'une information de temps de fonctionnement et d'une information de consommation horaire. Cette estimation est seulement délivrée sur un dispositif local d'affichage et n'est pas à priori destinée à être transmise pour traitement et analyse.

Le but de la présente invention est de remédier aux inconvénients et limites des équipements actuels en proposant un procédé de comptage de l'énergie consommée par un ensemble d'appareils électriques reliés à un réseau local de distribution d'énergie et pouvant communiquer de façon bidirectionnelle entre eux, qui permette une analyse des consommations d'énergie au sein du système.

Suivant l'invention, le procédé de comptage de l'énergie consommée par un ensemble d'appareils électriques reliés à un réseau local de distribution d'énergie et pouvant communiquer de manière bidirectionnelle entre eux et avec des moyens de gestion d'énergie au sein du réseau, est caractérisé en ce que, au niveau de chaque appareil, des estimations de consommation d'énergie sont effectuées et les résultats d'estimation correspondant sont stockés, en ce que les moyens de gestion d'énergie émettent à destination de chaque appareil communiquant des demandes de transmission desdites informations d'estimation, et en ce que ces résultats sont ensuite transmis au sein du réseau et collectés pour y être traitées et analysées.

Ainsi, avec le procédé selon l'invention, chaque appareil peut renseigner à tout moment un ou plusieurs dispositifs de gestion d'énergie appartenant au réseau, ce qui permet ainsi une observation des différents postes de consommation d'énergie. Un atout important du procédé selon l'invention est que les estimations de consommation d'énergie sont effectuées directement au niveau des appareils électriques qui sont agencés pour communiquer de manière bidirectionnelle entre eux et un dispositif de gestion d'énergie, et qui peuvent donc transmettre, de manière très souple et à la demande, des informations d'estimation de consommation d'énergie à un dispositif de gestion d'énergie. De plus, le procédé selon l'invention est avantageusement mis en oeuvre au sein d'un site local de consommation d'énergie et permet de réaliser des analyses soignées de consommation d'énergie qui jusqu'à présent n'étaient pas envisageables avec les systèmes de l'art antérieur qui, soit ne fournissent qu'une estimation globale d'énergie empêchant toute différentiation entre appareils, soit ne sont dédiés qu'à un seul appareil considéré isolément.

Suivant un autre aspect de l'invention, il est proposé un système électrique comprenant plusieurs appareils électriques et des moyens de gestion d'énergie tous reliés à un réseau de distribution d'énergie au sein d'un local et pouvant communiquer entre eux de manière bidirectionnelle, mettant en oeuvre le procédé selon l'invention, caractérisé en ce que certains des appareils électriques comprennent des moyens pour estimer l'énergie consommée localement sur une durée de temps prédéterminés et des moyens pour stocker cette évaluation d'énergie consommée, en ce que les moyens de gestion d'énergie sont agencés pour émettre à destination des appareils dotés de moyens d'évaluation d'énergie des demandes de transmission par ces derniers des informations d'estimation d'énergie préalablement stockées, et pour recevoir lesdites informations d'estimation d'énergie transmises par chacun de ces appareils et pour les traiter en vue de générer des résultats d'analyse.

Suivant encore un autre aspect de l'invention, un appareil électrique relié à un réseau de distribution d'énergie électrique, comprenant des moyens fonctionnels et des moyens pour communiquer de façon bidirectionnelle avec d'autres dispositifs reliés à ce réseau, appartenant à un système selon l'invention, est caractérisé en ce qu'il comprend en outre des moyens pour estimer l'énergie électrique consommée par ses moyens fonctionnels, des moyens pour stocker cette évaluation d'énergie consommée et des moyens de contrôle et de traitement reliés aux moyens de comptage et aux moyens de communication.

Dans un autre mode de mise en oeuvre du procédé selon l'invention pour un appareil électrique non communiquant au sein du réseau, il est prévu des moyens d'adaptation qui sont intercalés entre l'entrée dudit appareil et le réseau, ces moyens d'adaptation comprenant des moyens pour communiquer de façon bidirectionnelle avec d'autres appareils communiquants reliés au réseau, des moyens pour estimer l'énergie consommée par l'appareil associé, et des moyens de contrôle et de traitement reliés aux moyens de communication et aux moyens de comptage.

Selon encore un autre aspect de l'invention, le système électrique selon l'invention est doté d'au moins un dispositif de gestion d'énergie comprenant des moyens pour communiquer de façon bidirectionnelle avec d'autres équipements communiquants au sein dudit système, des moyens de contrôle et de traitement, des moyens de visualisation d'informations et des moyens pour entrer des consignes ou commandes, caractérisé en ce que les moyens de contrôle et de traitement sont agencés pour émettre via les moyens de communication à destination d'appareils selon l'invention, des demandes de transmission d'informations de comptage d'énergie, et pour traiter et analyser ces informations de comptage d'énergie.

Dans une version particulière du système selon l'invention, ce dispositif de gestion d'énergie peut être couplé à un dispositif de facturation ou de pré-paiement.

D'autres particularités et avantages de l'invention apparaîtront encore dans la description ci-après. Aux dessins annexés donnés à titre d'exemples non limitatifs:
- la figure 1 représente un exemple de structure d'un système selon l'invention; et
- la figure 2 illustre les fonctions essentielles assurées par le procédé selon l'invention.

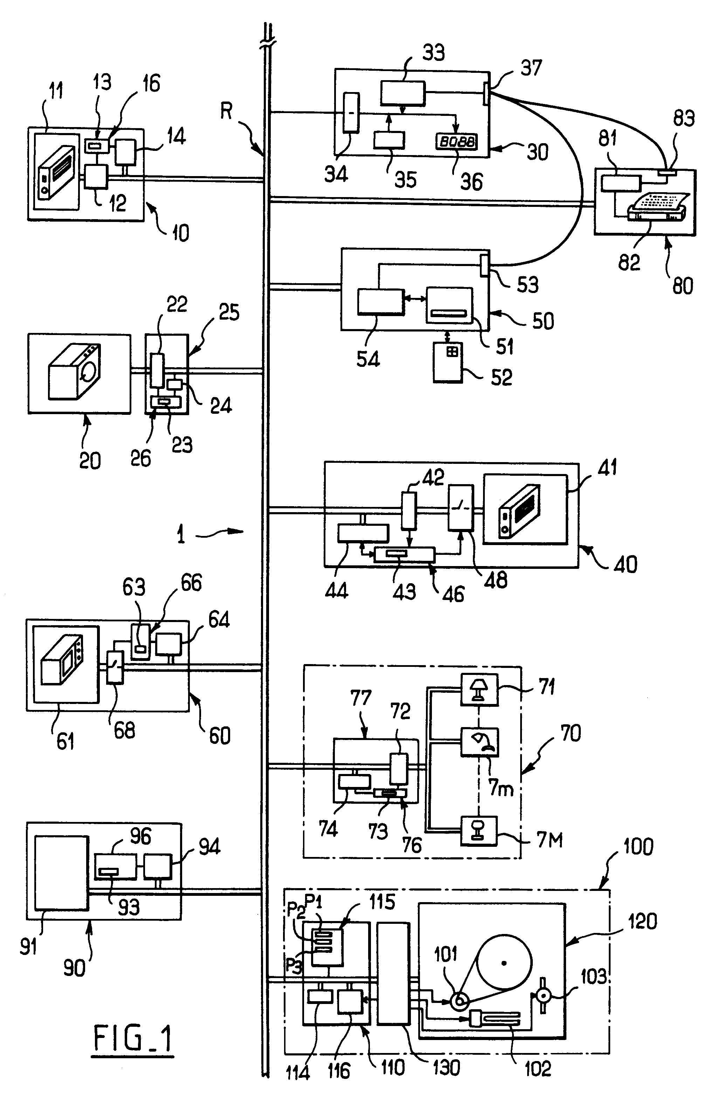

On va maintenant décrire un système électrique selon l'invention, comprenant à titre d'exemple différents types caractéristiques d'appareils électriques, en référence à la figure 1.

Le système électrique 1 comprend autour d'un réseau de distribution d'énergie R dans un local, un dispositif de gestion d'énergie 30, un dispositif de pré-paiement 50, un dispositif de facturation 80, un premier appareil électrique 10 selon l'invention communiquant et intégrant une unité de comptage d'énergie 12, un second appareil électrique 20 non communiquant relié au réseau R à travers un module d'adaptation 25, un troisième appareil électrique 40 communiquant et intégrant une unité de comptage d'énergie 42 et une unité de délestage/relestage 48, un ensemble 70 d'appareils électriques 71, 7m, 7_{M} reliés au réseau R à travers un module d'adaptation 77, et un appareil électrique 60 délestable/relestable non doté de moyens de comptage d'énergie.

Le dispositif de gestion d'énergie 30 comprend une unité de communication 34, une unité de contrôle et de traitement 33, des moyens 35 d'entrée d'une consigne ou d'une commande, par exemple un clavier ou tout autre dispositif équivalent, une unité de visualisation 36 et des moyens 37 de connexion à un dispositif de pré-paiement 50.

Ce dispositif de pré-paiement 50 comprend une unité 51 de lecture/écriture d'une carte à mémoire, par exemple une carte à puce ou à microcalculateur, une unité de contrôle et de traitement 54 et des moyens 53 de connexion au dispositif de gestion d'énergie 30.

Le dispositif de facturation 80 comprend des moyens de connexion 83 au dispositif de gestion 30, une unité de contrôle et de traitement et à titre d'exemple non limitatif, des moyens d'impression 82.

Il faut noter que le dispositif de pré-paiement 50 et le dispositif de facturation 80 peuvent communiquer avec le dispositif de gestion d'énergie 30 via le réseau, rendant non nécessaire des connexions externes.

Plus généralement, on peut prévoir que le dispositif de gestion d'énergie soit agencé pour permettre des transactions avec des équipements externes au système électrique, via le réseau d'alimentation R.

En outre, il peut être judicieux de prévoir un cryptage des informations échangées entre les différents appareils communiquants et le dispositif de gestion d'énergie, et plus généralement un cryptage des transactions relatives aux consommations d'énergie et aux facturations entre le dispositif de gestion d'énergie et les dispositifs de facturation et/ou de pré-paiement, ainsi qu'avec tout équipement extérieur connecté au réseau d'alimentation. Les techniques classiques de cryptage de communications peuvent être mises en oeuvre pour cela. Des moyens de cryptage/décryptage doivent alors être prévus au niveau du dispositif de gestion d'énergie et au niveau de chaque appareil communiquant concerné par ce cryptage.

Le premier appareil électrique 10 comprend un module fonctionnel 11 consommateur d'énergie, par exemple un convecteur électrique, une unité 12 d'estimation de l'énergie consommée par comptage du temps de fonctionnement du module fonctionnel 11, une unité de communication bidirectionnelle 14 et une unité de contrôle et de traitement 13, par exemple un microcontrôleur comprenant, à titre d'exemple non limitatif, une mémoire non volatile 13 destinée à stocker une information d'estimation d'énergie. Cette mémoire peut d'ailleurs être indépendante au sein de l'appareil électrique.

Le second appareil électrique 20, par exemple un lave-linge, n'est pas initialement doté de moyens de communication bidirectionnelle. Un module d'adaptation 25 est intercalé entre l'entrée d'énergie du second appareil électrique 20 et le réseau R. Il comprend une unité de communication bidirectionnelle 24, une unité de comptage d'énergie 22 et une unité de contrôle et de traitement 26 comprenant par exemple une mémoire non volatile 23 contenant une information d'estimation d'énergie.

Le troisième appareil électrique 40 comprend un module fonctionnel 41 consommateur d'énergie, par exemple un dispositif de chauffage ou tout autre équipement consommateur d'énergie, un dispositif de délestage/relestage 48 placé en amont du module fonctionnel 41, une unité de comptage d'énergie électrique 42, une unité de communication bidirectionnelle 44 et une unité de contrôle et de traitement 46 comprenant par exemple une mémoire non volatile 43.

Le module d'adaptation 77 intercalé entre les appareils électriques 71, 7n, 7N du sous-ensemble 70, par exemple des dispositifs d'éclairage, et le réseau R comprend une unité de communication 74, une unité de comptage d'énergie 72 et une unité de contrôle et de traitement 77 dotée par exemple d'une mémoire non volatile 73.

L'appareil électrique délestable/relestable 60 comprend un module fonctionnel 61, par exemple un four électrique, un module de délestage/relestage 68 placé en amont du module fonctionnel 61, une unité de communication bidirectionnelle 64, et une unité de contrôle et de traitement 66 comprenant par exemple une mémoire non volatile 63.

L'estimation de l'énergie consommée peut être réalisée soit au moyen d'une mesure effective de l'énergie consommée par l'appareil, soit au moyen d'une évaluation de consommation calculée à partir d'informations de consommation préalablement stockées au sein dudit appareil. On peut par exemple envisager cette seconde option dans le cas d'appareils économiques dans lesquels on ne pourrait concevoir la mise en oeuvre de dispositifs de mesure. L'information stockée peut par exemple être la puissance nominale de l'appareil. Cette puissance nominale est alors multipliée par un intervalle de temps sur lequel est estimée l'énergie consommée, pour obtenir une estimation de l'énergie consommée.

Ainsi, en référence à la figure 1, un appareil électrique 90 relié au réseau d'alimentation R comprend, outre des moyens de communication 94, des moyens de contrôle et de traitement 96, par exemple un microcontrôleur, contenant une information 93 relative à la puissance nominale de l'organe fonctionnel 91 de l'appareil. l'estimation d'énergie à transmettre au dispositif de gestion d'énergie 30 peut alors être calculée à partir de cette information de puissance nominale multipliée par la durée de fonctionnement de l'appareil.

Le procédé selon l'invention peut aussi être appliqué à des appareils comprenant plusieurs modules fonctionnels consommateurs d'énergie présentant des cycles de fonctionnement distincts au sein d'un cycle global de fonctionnement. On peut citer l'exemple d'un lave-linge 100 comprenant dans sa partie fonctionnelle 120 un moteur électrique 101 d'entrainement d'un tambour, une résistance de chauffage 102 et une pompe de vidange 103 et d'autres équipements auxiliaires, notamment des électrovannes, non représentés. Pour ce type d'appareil "composite", il est nécessaire de prévoir un stockage des différentes puissances unitaires P1, P2, P3 de chaque élément consommateur d'énergie et une acquisition des différents temps de fonctionnement pour obtenir le calcul d'une estimation de l'énergie globale consommée par l'appareil "composite". Le stockage des informations de puissance unitaire P1, P2, P3 peut être effectué au sein d'une mémoire non volatile 115 prévue dans un module de contrôle 110 comprenant en outre une unité de communication 114, une unité de contrôle et de traitement 116 qui peut être affectée au calcul de l'estimation de l'énergie consommée à partir des informations de puissance unitaire et de mesures de temps de fonctionnement des différents composants. Ces temps de fonctionnement peuvent être avantageusement mesurés au niveau du module programmateur 130 du lave-linge 100.

On peut également prévoir des appareils électriques communicants 10, 20, 40 dotés d'un dispositif de mesure d'énergie 12, 22, 42 réalisé suivant des techniques connues dans le domaine du comptage d'énergie.

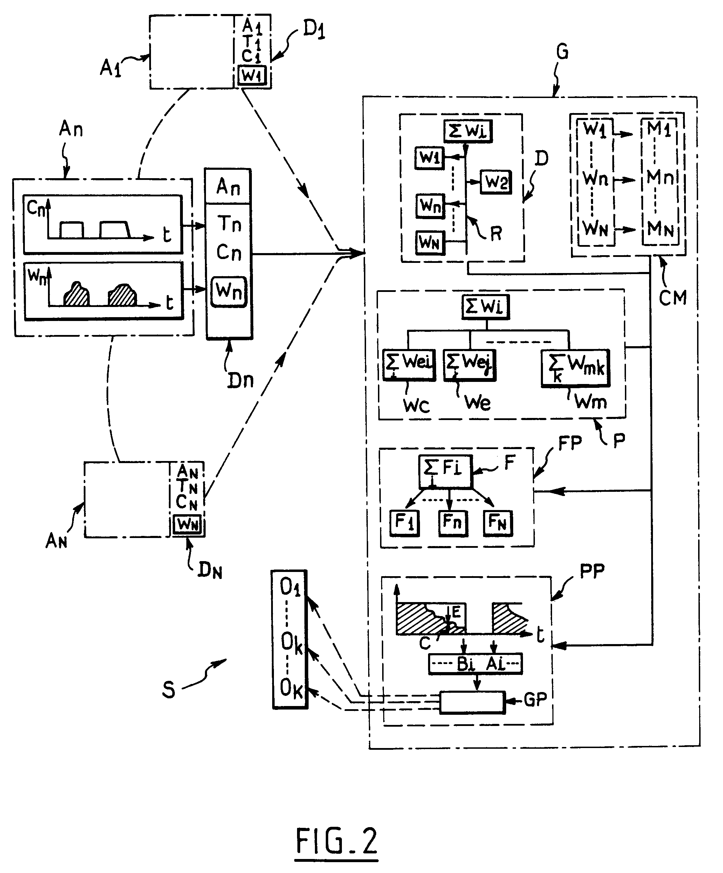

On va maintenant décrire, à titre d'exemple, des fonctions essentielles S assurées par le procédé selon l'invention, en référence à la figure 2. A chaque appareil électrique A1, An, AN, doté de moyens individuels de comptage d'énergie internes ou externes, correspondent des informations représentatives du fonctionnement et du comportement énergétique de l'appareil. Ainsi, pour un appareil électrique An, les informations essentielles Dn peuvent être:
- une durée de fonctionnement Tn,
- un cycle de fonctionnement Cn, et
- une estimation d'énergie Wn.

Les informations D1, Dn, DN correspondant respectivement aux appareils électriques A1, An, AN sont transmises dans leur intégralité ou partiellement au dispositif de gestion d'énergie 30 qui exécutent un ensemble G d'opérations de traitement. Ces opérations peuvent inclure:
- une distribution D incluant une acquisition des différentes estimations d'énergie W1, W2, Wn, W_{N} correspondant aux appareils électriques A1, A2, An, A_{N} et un calcul de l'énergie globale ΣWi consommée dans le système 1;
- une opération C_{M} de conversion des estimations d'énergie W1, Wn, W_{N} en unités monétaires M1, Mn, M_{N};
- un calcul P de la répartition de l'énergie globale consommée ΣWi en différents postes d'énergie correspondant par exemple à des classes d'appareils électriques ou à des localisations spécifiques;
- une opération de facturation à posteriori FP, en coopération avec le dispositif de facturation 80, effectuée à partir des informations d'énergie acquises ou traitées et fournissant soit une facturation globale F, soit une facturation détaillée par poste F1, Fn, F_{N};
- une opération de pré-paiement PP, en coopération avec le dispositif de pré-paiement 50, prenant en compte d'une part les informations d'énergie consommée acquises par le dispositif de gestion d'énergie 30, et d'autre part, un crédit d'énergie ou monétaire disponible sur une carte à puce.

Plus généralement, on peut prévoir, toujours dans le cadre du procédé selon l'invention, l'existence d'un compte "client" matérialisé soit par une carte à puce, soit au sein d'une mémoire locale implantée, par exemple, au sein du dispositif de gestion d'énergie ou au sein du dispositif de pré-paiement ou en tout autre dispositif relié au réseau. Ce compte-client peut par exemple être chargé à partir d'un terminal vidéotex, notamment un Minitel, ou à partir de tout équipement externe relié au réseau. Il peut être débité par le dispositif de gestion d'énergie ou par le dispositif de pré-paiement.

Dans le cadre de l'opération P de répartition par poste, on peut par exemple prévoir un poste énergétique Wc correspondant aux équipements de chauffage, un poste énergétique We correspondant aux équipements d'éclairage, ou tout autre type de poste énergétique Wm; chaque poste énergétique Wc, We, Wm est déterminé par sommation ΣWci, ΣWei, ΣWmk des énergies estimées dans chaque catégorie d'appareil électrique.

Les opérations de pré-paiement PP mettent en oeuvre une modification du crédit C disponible sur la carte à puce détenue par l'abonné en fonction de l'énergie consommée. Ce pré-paiement peut être appliqué soit à la consommation globale d'énergie du système, soit pour des appareils ou des postes énergétiques spécifiques. Lorsqu'un épuisement du crédit C est constaté, une commande de blocage Bi est émise. Lorsqu'un crédit non nul est de nouveau constaté, par exemple lors de la présentation d'une carte rechargée ou d'une nouvelle carte, une autorisation de fonctionnement Ai est émise. Ces ordres de blocage et d'autorisation de fonctionnement sont ensuite traitées, soit au niveau du dispositif de pré-paiement 50, soit au niveau du dispositif de gestion d'énergie 30 pour déterminer une stratégie GP de délestage/relestage d'appareils électriques délestables auxquels sont transmis, via le réseau R, des signaux de délestage/relestage O1, Ok, O_{K}.

Plus généralement, le procédé selon l'invention rend possible de nombreuses transactions entre le système d'appareils électriques et des systèmes de gestion et de tarification internes ou externes au réseau local R.

Par ailleurs, pour empêcher que des appareils électriques puissent être utilisés sans que les informations d'énergie consommée soient transmises au dispositif de gestion d'énergie, on peut avantageusement prévoir un blocage d'un appareil communiquant lorsque celui-ci n'a pas reçu de message valide en réponse à un nombre prédéterminé de demandes, par exemple deux demandes, émises par le dispositif de gestion d'énergie. Des moyens non volatiles de stockage d'une information doivent alors être prévus pour éviter toute tentative de réutilisation de l'appareil par coupure de l'alimentation et remise sous tension. Ceci peut être réalisé au sein de l'unité de contrôle et de traitement de l'appareil.

Bien sûr, l'invention n'est pas limitée aux exemples qui viennent d'être décrits et de nombreux aménagements peuvent être apportés à ces exemples sans sortir du cadre de l'invention.

Ainsi, elle peut être appliquée à tout type de réseau de distribution d'énergie et pour tout support de communication au sein du réseau, par exemple par courants porteurs. On peut également prévoir pour un même local plusieurs dispositifs de gestion d'énergie en fonction de la configuration du système électrique. On peut également envisager bien d'autres types de traitement et d'analyse des informations d'énergie, notamment des traitements statistiques. En outre, on peut envisager au sein du réseau une délocalisation des moyens de gestion d'énergie et plus généralement des services liés à l'énergie. On peut ainsi prévoir une répartition des ressources, par exemple des unités de visualisation, de saisie ou de traitement ,dans plusieurs appareils appartenant au système selon l'invention. Par ailleurs, un système selon l'invention peut être intégré à un système d'information d'ordre supérieur en faisant intervenir des moyens de traitement extérieurs via différents supports de télécommunication, tels que le réseau téléphonique, des réseaux câblés de télédistribution, des réseaux radio ou des réseaux utilisant des courants porteurs. Parmi les applications rendues possibles par une telle intégration, on peut citer:
- l'activation/désactivation de certains services au sein du réseau local,
- le téléchargement de fonctions nouvelles par un serveur extérieur,
- la mise à jour d'informations telles que des coefficients de conversion monétaire d'énergie, et
- la télécollecte d'informations liées à la consommation d'énergie et préalablement stockées au sein du système selon l'invention.

## Revendications

1. Procédé de comptage de l'énergie consommée par un ensemble d'appareils électriques (10, 20, 40, 60) reliés à un réseau local (R) de distribution d'énergie et pouvant communiquer de manière bidirectionnelle entre eux et avec des moyens de gestion d'énergie (30) au sein du réseau (R), caractérisé en ce que au niveau de chaque appareil (10, 20, 40, 60), des estimations de consommation d'énergie sont effectuées et les informations d'estimation correspondantes sont stockées, en ce que les moyens de gestion d'énergie (30) émettent à destination de chaque appareil communiquant (10, 20, 40, 60) des demandes de transmission desdites informations d'estimation, et en ce que ces informations sont ensuite transmises via le réseau (R) aux moyens de gestion d'énergie (30) pour y être traitées et analysées.

2. Procédé selon la revendication 1, caractérisé en ce qu'il comprend en outre, au niveau de certains desdits appareils communiquants (A1, An, A_{N}), une acquisition d'informations temporelles (T1, Tn, T_{N}) sur le fonctionnement dudit appareil (A1, An, A_{N}), en ce que les informations temporelles acquises au niveau d'un appareil (An) comprennent des informations (Cn) représentatives d'un cycle de fonctionnement dudit appareil (An) et/ou des informations (T1, Tn, T_{N}) relatives au temps de fonctionnement dudit appareil (A1, An, A_{N}).

3. Procédé selon l'une quelconque des revendications précédentes, appliqué à un système électrique (1) comprenant plusieurs sous-ensembles d'appareils pouvant communiquer de façon bidirectionnelle, caractérisé en ce qu'il comprend, au niveau des moyens de gestion d'énergie (30), un traitement (D) des différentes énergies estimées (W1, W2, Wn, W_{N}) transmises relatives à chaque appareil et sur un laps de temps prédéterminé, pour effectuer un comptage cumulé de l'énergie consommée (ΣWi) dans l'ensemble du système (1) et un traitement (P) pour fournir des comptages d'énergie (Wc, We, Wm) relatifs à chaque sous-ensemble d'appareils.

4. Procédé selon l'une quelconque des revendications précédentes, caractérisé en ce qu'il comprend, au niveau des moyens de gestion d'énergie (30), une opération de conversion (C_{M}) d'informations d'estimation d'énergie (W1, Wn, W_{N}) en unités monétaires (M1, Mn, M_{N}).

5. Procédé selon l'une quelconque des revendications précédentes, caractérisé en ce qu'il est associé à une opération de facturation (FP) utilisant les informations d'estimation d'énergie préalablement traitées par les moyens de gestion d'énergie (30).

6. Procédé selon l'une quelconque des revendications précédentes, caractérisé en ce qu'il est associé à une opération de pré-paiement (PP) utilisant les informations d'estimation d'énergie préalablement traitées par les moyens de gestion d'énergie (30) pour mettre régulièrement à jour un crédit (C) d'énergie disponible, et à un procédé (GP) pour bloquer ou autoriser le fonctionnement de certains appareils prédéterminés, selon que le crédit d'énergie disponible (C) est inférieur ou supérieur à une valeur prédéterminée.

7. Procédé selon l'une quelconque des revendications précédentes, caractérisé en ce qu'il comprend en outre un blocage de l'alimentation en énergie du module fonctionnel d'un appareil électrique communiquant lorsque ce dernier n'a reçu aucun message valide en provenance des moyens de gestion d'énergie en réponse à un nombre prédéterminé de demandes émises par ledit appareil, une mémorisation de ce blocage étant effectuée au niveau dudit appareil.

8. Système électrique (1) comprenant plusieurs appareils électriques (10, 20, 40, 60, 70) et des moyens de gestion d'énergie (30) tous reliés à un réseau (R) de distribution d'énergie au sein d'un local et pouvant communiquer entre eux de manière bidirectionnelle, mettant en oeuvre le procédé selon l'une quelconque des revendications précédentes, caractérisé en ce que certains (10, 40) desdits appareils électriques comprennent des moyens (12, 42) pour estimer l'énergie consommée localement sur une durée de temps prédéterminée et des moyens (13, 43) pour stocker cette évaluation d'énergie consommée, et en ce que les moyens de gestion d'énergie (30) sont agencés pour recevoir les informations d'estimation d'énergie issues de chacun de ces appareils (10, 40) et pour les traiter en vue de générer des résultats d'analyse, et en ce que les moyens de gestion d'énergie (30) sont agencés pour émettre à destination des appareils (10, 40) dotés de moyens d'évaluation d'énergie (12, 42) des demandes de transmission par ces derniers des informations d'estimation d'énergie préalablement stockées.

9. Système (1) selon la revendication 8, caractérisé en ce qu'il comprend en outre des appareils électriques non communiquants (20) qui sont reliés au réseau (R) via des moyens d'adaptation (25) comprenant des moyens (22) pour estimer l'énergie consommée dans ledit appareil (20) et des moyens (24) pour communiquer de façon bidirectionnelle avec les autres appareils communiquants du réseau (R).

10. Système (1) selon l'une quelconque des revendications 8 ou 9, caractérisé en ce que les moyens de gestion d'énergie (30) coopèrent avec des moyens de facturation (80) pour générer des factures de consommation d'énergie à partir des informations d'énergie estimée transmises.

11. Système (1) selon l'une quelconque des revendications 8 à 10, caractérisé en ce qu'il comprend en outre des appareils communiquants (40, 60) comprenant des moyens de délestage/relestage (46, 66) commandés par les moyens de gestion d'énergie (30).

12. Système (1) selon l'une quelconque des revendications 8 à 11, caractérisé en ce qu'il comprend au moins un sous-ensemble (70) d'appareils électriques, ce sous-ensemble (70) étant relié au réseau (R) via des moyens d'adaptation (77) comprenant des moyens (72) pour estimer l'énergie consommée par le sous-ensemble (70) et des moyens (74) pour communiquer de façon bidirectionnelle avec les autres appareils communiquants reliés au réseau (R).

13. Système selon l'une quelconque des revendications 8 à 12, comprenant au moins un appareil électrique communiquant (100) comportant plusieurs modules fonctionnels (101, 102, 103) consommateurs d'énergie présentant des cycles de fonctionnement distincts, caractérisé en ce que ledit appareil (100) comprend des moyens (115) pour stocker, pour chaque module fonctionnel (101, 102, 103), une information relative à la puissance unitaire (P1, P2, P3) dudit module fonctionnel (101, 102, 103), des moyens pour mesurer le temps de fonctionnement de chaque module fonctionnel (101, 102, 103), et des moyens (116) pour calculer une estimation de l'énergie globale consommée par ledit appareil (100) à partir desdites informations de puissance unitaire (P1, P2, P3) et des temps de fonctionnement de chaque module fonctionnel (101, 102, 103).

14. Système selon l'une quelconque des revendications 8 à 13, caractérisé en ce que certains desdits appareils électriques comprennent des moyens pour bloquer l'alimentation en énergie de leur module fonctionnelle si ces appareils n'ont pas reçu de message valide provenant des moyens de gestion d'énergie en réponse à un nombre prédéterminé de demandes émises par ces appareils.

15. Appareil électrique (10, 40) relié à un réseau de distribution d'énergie électrique (R), comprenant des moyens fonctionnels (11, 41) et des moyens (14, 44) pour communiquer de façon bidirectionnelle avec d'autres dispositifs reliés à ce réseau (R), appartenant à un système (1) selon l'une quelconque des revendications 8 à 14, caractérisé en ce qu'il comprend en outre des moyens (12, 42) pour estimer l'énergie électrique consommée par ses moyens fonctionnels (11, 41), des moyens (13, 43) pour stocker cette évaluation d'énergie consommée et des moyens de contrôle et de traitement (16, 46) reliés aux moyens de comptage (12, 42) et aux moyens de communication (14, 44).

16. Appareil électrique (40) selon la revendication 15, caractérisé en ce qu'il comprend en outre des moyens de délestage/relestage (48) pour bloquer ou autoriser le fonctionnement de ses moyens fonctionnels (41), lesdits moyens de délestage/relestage (48) étant commandés par les moyens de contrôle et de traitement (46) en réponse à des demandes émis par les moyens de gestion d'énergie (30).

17. Appareil électrique (20) relié au réseau de distribution d'énergie électrique (R), comprenant des moyens fonctionnels et appartenant à un système selon l'une quelconque des revendications 8 à 14, caractérisé en ce que des moyens d'adaptation (25) sont intercalés entre l'entrée dudit appareil (20) et le réseau (R), lesdits moyens d'adaptation (25) comprenant des moyens (24) pour communiquer de façon bidirectionnelle avec d'autres appareils communiquants reliés au réseau (R), des moyens (22) pour estimer l'énergie consommée par l'appareil associé (20), et des moyens de contrôle et de traitement (26) reliés aux moyens de communication (24) et aux moyens de comptage (22) et comprenant des moyens (23) pour stocker l'information d'estimation d'énergie.

18. Appareil (90) selon l'une quelconque des revendications 15 à 17, caractérisé en ce qu'il comprend, au titre des moyens d'estimation, des moyens pour lire des informations représentatives de la consommation nominale d'énergie dudit appareil (90), ces informations étant préalablement stockées dans les moyens de stockage (93) associés audit appareil (90).

19. Appareil (100) selon l'une quelconque des revendications 15 à 18, comprenant plusieurs modules fonctionnels (101, 102, 103) présentant des cycles de fonctionnement distincts et des puissances unitaires distinctes (P1, P2, P3), caractérisé en ce que ses moyens d'estimation d'énergie (110) comprennent en outre des moyens pour mesurer les temps de fonctionnement respectifs de chaque module fonctionnel (101, 102, 103) et sont agencés pour fournir une estimation d'énergie consommée à partir de la somme des produits de chaque temps de fonctionnement mesurés par la puissance unitaire (P1, P2, P3) du module fonctionnel correspondant (101, 102, 103), les informations relatives à la puissance unitaire de chaque module fonctionnel étant préalablement stockées au sein dudit appareil.

20. Dispositif de gestion d'énergie (30), mis en oeuvre dans un système électrique (1) selon l'une quelconque des revendications 8 à 14, comprenant des moyens (34) pour communiquer de façon bidirectionnelle avec d'autres équipements communiquants au sein dudit système (1), des moyens de contrôle et de traitement (33), des moyens de visualisation (36) et des moyens (35) pour entrer des consignes ou commandes, caractérisé en ce que les moyens de contrôle et de traitement (33) sont agencés pour émettre via les moyens de communication (34) à destination d'appareils selon l'une quelconque des revendications 15 à 19, des demandes de transmission d'informations de comptage d'énergie et pour traiter et analyser ces informations de comptage d'énergie.

21. Dispositif (30) selon la revendication 20, caractérisé en ce que les moyens de contrôle et de traitement (33) et les moyens de visualisation (36) coopèrent pour assurer une visualisation des informations individuelles de consommation d'énergie (W1, W2, Wn, W_{N}) associée à chaque appareil électrique (A1, A2, An, A_{N}).

22. Dispositif (30) selon l'une des revendications 20 ou 21, caractérisé en ce qu'il est agencé pour coopérer avec des moyens de facturation (80) auxquels il fournit des informations individuelles et/ou globales de comptage d'énergie.

23. Dispositif (30) selon l'une quelconque des revendications 20 à 22, caractérisé en ce qu'il est agencé pour coopérer avec des moyens de pré-paiement (50) auxquels il fournit des informations individuelles et/ou globales de comptage d'énergie.

24. Dispositif (30) selon la revendication 23, caractérisé en ce que ses moyens de contrôle et de traitement (33) sont agencés pour émettre, à destination d'appareils électriques (60 40) dotés de moyens de délestage/relestage (68, 48), des ordres (O1, Ok, O_{K}) de blocage ou d'autorisation en fonction d'informations émises par les moyens de pré-paiement (50).

25. Dispositif (30) selon l'une quelconque des revendications 20 à 24, caractérisé en ce que les moyens de contrôle et de traitement (33) coopèrent avec les moyens de communication (34) pour réaliser via le réseau (R) toute transaction relative au comptage d'énergie avec le procédé selon l'une quelconque des revendications 1 à 12, avec des équipements externes au système électrique (1).

26. Dispositif selon l'une quelconque des revendications 20 à 25, caractérisé en ce qu'il comprend en outre des moyens pour décrypter des informations cryptées transmises par des appareils communiquants et des moyens pour crypter des informations, notamment des informations de facturation et monétaire, transmises au cours de transactions avec des moyens de traitement, notamment des moyens de facturation et/ou des moyens de pré-paiement.
